# EUROPÄISCHE PATENTANMELDUNG

(11) **EP 4 748 588 A1**
(43) Veröffentlichungstag der Anmeldung: **27.05.2026**
(21) Anmeldenummer: 24214907.8
(22) Anmeldetag: 22.11.2024
(51) Int. Cl.: B60B 33/00, B62B 5/04

(54) **MOBILER STÄNDER FÜR EINEN ZU HALTENDEN GEGENSTAND**

(71) Anmelder: NerTes GmbH Mobile Ständertechnik, 24983 Handewitt (DE)
(72) Erfinder: NERGER, Jürgen, 24983 Handewitt (DE); TESKE, Heiko, 24960 Glücksburg (DE)
(74) Vertreter: Seemann & Partner Patentanwälte mbB

(57) **Zusammenfassung**

Die Erfindung betrifft einen mobilen Ständer (10) für einen zu haltenden Gegenstand, umfassend einen Rollenträger (20) mit drei oder mehr Lenkrollen, eine Aufnahme (12), über die der zu haltende Gegenstand mit dem mobilen Ständer (10) koppelbar ist, eine Arretiervorrichtung (30) und eine Betätigungsvorrichtung (40) mit einem Betätigungselement (42), die mit der Arretiervorrichtung (30) verbunden und ausgebildet ist, bei Betätigung des Betätigungselements (42) die Arretiervorrichtung (30) reversibel zwischen einer die Lenkrollen (22) nicht arretierenden Fahrstellung und einer die Lenkrollen (22) arretierenden Bremsstellung zu bewegen.

Erfindungsgemäß weist die Arretiervorrichtung (30) zu jeder der drei oder mehr Lenkrollen (22) jeweils eine horizontal liegende ringförmige Bremsstruktur (32) mit einer an einer Innenkante der ringförmigen Bremsstruktur (32) umlaufenden Bremsfläche (34) auf, die auf einer vertikalen Schwenkachse (24) der ihr zugeordneten Lenkrolle (22) zentriert ist, wobei die ringförmigen Bremsstrukturen (32) bei Betätigung des Betätigungselements (42) eine vertikale Verschiebung erfahren, bei der ihre Bremsflächen (34) in der Fahrstellung keinen Kontakt mit der ihr zugeordneten Lenkrolle (22) haben und in der Bremsstellung eine Lauffläche (26) der ihr zugeordneten Lenkrolle (22) berühren und durch Beaufschlagung der Lauffläche (26) mit einer Haltekraft Rollbewegungen und Schwenkbewegungen der Lenkrolle (22) unterbinden.

## Beschreibung

Die Erfindung betrifft einen mobilen Ständer für einen zu haltenden Gegenstand, umfassend einen Rollenträger mit drei oder mehr Lenkrollen, eine mit dem Rollenträger verbundene Aufnahme, über die der zu haltende Gegenstand mit dem mobilen Ständer koppelbar ist, eine Arretiervorrichtung, die ausgebildet ist, den Rollenträger gegenüber dem Untergrund ortsfest zu arretieren, und eine Betätigungsvorrichtung mit einem Betätigungselement, die mit der Arretiervorrichtung verbunden und ausgebildet ist, bei Betätigung des Betätigungselements die Arretiervorrichtung reversibel zwischen einer die Lenkrollen nicht arretierenden Fahrstellung und einer die Lenkrollen arretierenden Bremsstellung zu bewegen.

Mobile Ständer können für vielfältige Gegenstände eingesetzt werden. Bekannte Beispiele sind Ständer für Sonnenschirme, insbesondere Mittelmastschirme oder Ampelschirme, o.ä., wobei in jedem Fall eine ausreichende Kippsicherheit gewahrt bleiben sollte. Solche Gegenstände erfordern schwere Standfüße, so dass es sehr kraftaufwändig sein kann, die schweren Ständer zu bewegen. Dies wird durch mobile Ständer, die auf Rollen verfahrbar sind, kompensiert.

Mobile Ständer sind beispielsweise aus der EP 1 571 277 A1 oder aus der EP 2 565 350 A1 bekannt.

Der aus der EP 1 571 277 A1 bekannte mobile Ständer weist eine hohe Standfestigkeit und Stabilität auf, gleichzeitig ist die Verletzungsgefahr sehr gering. Dieser mobile Ständer zeichnet sich dadurch aus, dass mittels einer an einer Hebeeinrichtung angeordneten Betätigungsstange eine Relativbewegung zwischen einem Standfuß und einem Rollenträger bewirkt wird, wobei durch diese Bewegung ein Abstand zwischen dem Rollenträger und dem Standfuß verändert wird. Zum ortsfesten Abstellen des mobilen Ständers in einer Standstellung wird der Standfuß auf einen Untergrund abgesenkt. In einer Fahrstellung wird der Standfuß vom Untergrund angehoben.

Ein solcher mobiler Ständer weist vielfach ein hohes Eigengewicht auf, welches bis zu 150 kg betragen kann. Dieses hohe Gewicht verleiht dem mobilen Ständer einen stabilen Stand. Gleichzeitig wirkt es jedoch auch auf den Standfuß, die Hebeeinrichtung und den Rollenträger. Beim Anheben des Rollenträgers, was zu einem gleichzeitigen Absenken des Standfußes führt, treten an der Hebeeinrichtung aufgrund des hohen Gewichtes auch hohe Drehmomente auf. Diese können dazu führen, dass die zur Betätigung der Hebeeinrichtung eingesetzte Betätigungsstange, die auch als Schubstange für den Ständer dient, in Richtung eines von dem Ständer gehaltenen Mastes, beispielsweise eines Sonnenschirms, beschleunigt wird. Wird die Betätigungsstange nicht stets sicher und mit einer gewissen Kraft geführt, so besteht das Risiko, dass bei einer solchen nicht vorgesehenen Handhabung des Ständers, die Betätigungsstange aus der Hand gleitet.

Aus diesem Grund umfasst der aus der EP 2 565 350 A1 bekannte mobile Ständer eine Kraftunterstützungseinrichtung, die beispielsweise in Form einer Zugfeder ausgeführt ist. Eine solche Zugfeder wirkt der Schwenkbewegung der Betätigungsstange, genauer dem auf die Betätigungsstange wirkenden Drehmoment, zumindest teilweise entgegen. Mit anderen Worten wird das aufgrund des hohen Gewichts des Standfußes auf die Betätigungsstange der Hebeeinrichtung wirkende Drehmoment durch die eingesetzte Kraftunterstützungseinrichtung zumindest teilweise kompensiert.

Sowohl bei dem aus der EP 1 571 277 A1 als auch bei dem aus der EP 2 565 350 A1 bekannten mobilen Ständer muss zum Anheben des Standfußes eine relativ große Kraft aufgewendet werden, da der Standfuß ein verhältnismäßig hohes Gewicht aufweist.

Ein weiterer mobiler Ständer für einen zu haltenden Gegenstand ist aus EP 3 358 109 B1 bekannt. Dieser umfasst ein Standelement zum ortsfesten Aufstellen des Ständers auf einem Untergrund in einer Standstellung, einen Rollenträger mit mindestens drei Rollen, die dazu vorgesehen sind, in einer Fahrstellung auf dem Untergrund abzurollen, so dass der Ständer mobil ist, eine Aufnahme, über die der zu haltende Gegenstand mit dem Ständer koppelbar ist, und eine Betätigungsvorrichtung, mit der das Standelement zwischen der Standstellung und der Fahrstellung verschoben werden kann. Bei diesem mobilen Ständer ist die Aufnahme auf dem Rollenträger befestigt. Dadurch ist der Wechsel zwischen der Standstellung und der Fahrstellung des mobilen Ständers weniger anstrengend als bei den zuvor beschriebenen mobilen Ständern, da das Gewicht des zu haltenden Gegenstands nicht auch angehoben werden muss.

Ferner ist aus EP 4 368 871 A1 ein entsprechender mobiler Ständer bekannt, der einen Rollenträger mit mindestens drei Rollen, eine Aufnahme für einen zu haltenden Gegenstand und eine Arretierungsvorrichtung, wobei die Arretierungsvorrichtung mit einer Betätigungsvorrichtung verbunden ist, mit der die Arretierungsvorrichtung reversibel zwischen einer Ruhestellung ohne Untergrundkontakt und einer Arretierstellung mit Untergrundkontakt bewegt werden kann und die ein oder mehrere Paare von längserstreckten Arretierungselementen aufweist, die durch Betätigung der Betätigungsvorrichtung zueinander gegenläufig aus der Ruhestellung in die Arretierstellung verschwenkbar sind und in der Arretierstellung im Untergrundkontakt schräg und zueinander gegenläufig ausgerichtet sind. Die Arretierungselemente verkeilen sich mit dem Untergrund und geben so einen Schutz gegen ein Wegrollen und Wegdrehen.

Ausgehend von diesem Stand der Technik ist eine Aufgabe der vorliegenden Erfindung, einen mobilen Ständer für einen zu haltenden Gegenstand zur Verfügung zu stellen, der bei geringem Gewicht eine alternative Art des Schutzes vor Wegrollen und Wegdrehen aufweist.

Diese Aufgabe wird gelöst durch einen mobilen Ständer für einen zu haltenden Gegenstand, umfassend einen Rollenträger mit drei oder mehr Lenkrollen, eine mit dem Rollenträger verbundene Aufnahme, über die der zu haltende Gegenstand mit dem mobilen Ständer koppelbar ist, eine Arretiervorrichtung, die ausgebildet ist, den Rollenträger gegenüber dem Untergrund ortsfest zu arretieren, und eine Betätigungsvorrichtung mit einem Betätigungselement, die mit der Arretiervorrichtung verbunden und ausgebildet ist, bei Betätigung des Betätigungselements die Arretiervorrichtung reversibel zwischen einer Fahrstellung und einer Bremsstellung zu bewegen, der dadurch weitergebildet ist, dass die Arretiervorrichtung zu jeder der drei oder mehr Lenkrollen jeweils eine mit der Arretiervorrichtung fest verbundene und auf eine vertikale Schwenkachse der ihr jeweils zugeordneten Lenkrolle zentrierte horizontal ausgerichtete ringförmige Bremsstruktur aufweist und beim Übergang von der Fahrstellung zur Bremsstellung und umgekehrt jeweils eine vertikale Verschiebung erfährt, wobei die ringförmigen Bremsstrukturen in der Fahrstellung keinen Kontakt mit den Lenkrollen haben, während sie in der Bremsstellung die Laufflächen der ihnen zugeordneten Lenkrollen unabhängig von deren momentanen Schwenkpositionen mit einer Haltekraft beaufschlagen und sowohl Rollbewegungen als auch Schwenkbewegungen der Lenkrollen behindern.

Grundidee der Erfindung ist es, mittels der Arretiervorrichtung alle Lenkrollen gleichzeitig zu blockieren. Hierfür dient die vertikal, also entlang der Schwenkachsen der Lenkrollen, verschiebbare Arretiervorrichtung, die für jede der Lenkrollen eine ringförmige Bremsstruktur aufweist. Diese ringförmigen Bremsstrukturen weisen einen Durchmesser auf, der kleiner ist als ein Durchmesser des Kreises, den die Laufrollen der Lenkrollen in einer vollständigen Drehung um 360° um ihre vertikale Schwenkachse maximal aufspannen. Außerdem sind die ringförmigen Bremsstrukturen auf die vertikalen Schwenkachsen ihrer zugeordneten Lenkrollen zentriert. Dadurch ist sichergestellt, dass die ringförmigen Bremsstrukturen bei ihrer vertikalen Annäherung an die ihnen zugeordneten Lenkrollen deren Laufflächen in jedem Fall berühren, unabhängig davon, in welcher Schwenkposition sich die Lenkrollen gerade befinden.

Während also in der Fahrstellung die Lenkrollen frei sind zu rollen und um ihre vertikale Schwenkachse zu verschwenken, kontaktieren die Bremsstrukturen die Laufflächen der Lenkrollen und verhindern dadurch sowohl ein weiteres Rollen als auch ein Verschwenken der jeweiligen Lenkrolle in jeglicher Position der Lenkrolle. Jede der Lenkrollen wird auf diese Weise in ihrer jeweiligen im Moment des Bremskontakts eingenommenen Ausrichtung festgestellt, wodurch ein sicherer Stand erzielt wird als wenn die Lenkrollen immer noch frei wären, zu verschwenken.

Die Mechanik der Arretiervorrichtung trägt keine Gewichte, so dass die für die Betätigung der Betätigungsvorrichtung aufzuwendende Kraft unabhängig von dem Gewicht des mobilen Ständers und seiner Gewichte ist.

In Ausführungsformen sind die ringförmigen Bremsstrukturen in oder an einem Bremsstrukturträger ausgebildet, insbesondere als Innenkonturen von kreisförmigen Öffnungen in einer gemeinsamen Platte oder in separaten, jeweils einer Lenkrolle zugeordneten Bremsplatten, oder als Endkanten von vertikal orientierten zylindrischen Strukturen ausgebildet. Die Materialstärke dieser Bremsstrukturträger, also Platte, Bremsplatten, zylindrische Strukturen o. ä., ist so zu wählen, dass eine ausreichende Steifigkeit gewährleistet ist.

Vorteilhafterweise weisen die ringförmigen Bremsstrukturen im radialen Querschnitt scharfe oder abgerundete Kanten auf. Eine Solche Kante kann auch eine Riffelung aufweisen, um Schwenkbewegungen noch wirksamer zu unterbinden. Solche Kantenstrukturen sind vorteilhaft mit Lenkrollen verwendbar, deren Laufflächen aus einem widerstandsfähigen Material wie beispielsweise Nylon bestehen.

In weiteren Ausführungsformen weisen die ringförmigen Bremsstrukturen im radialen Querschnitt abgeschrägte und/oder konkav gerundete Bremsflächen auf, wobei insbesondere die Neigung und/oder Rundung der Bremsflächen zu einer Neigung und/oder einem konvexen Radius der Lauffläche der Lenkrolle an der zu kontaktierenden Stelle passt. Eine solche Formung erhöht die Kontaktfläche zwischen den Bremsflächen und den Laufflächen der Lenkrollen und damit die Standsicherheit des mobilen Ständers im arretierten Zustand. Außerdem sind solche flächigen Bremsstrukturen auch mit Laufflächen verwendbar, die geringeren Anforderungen an die Widerstandsfähigkeit genügen müssen, beispielsweise gummierten Laufflächen.

Wenn zusätzlich die Enden der Bremsflächen im radialen Querschnitt abgerundete Kanten aufweisen oder ein konvexer Radius der Bremsflächen größer ist als ein Radius der Laufflächen der Lenkrollen, wird vermieden, dass die Bremsstrukturen beim Feststellen der Lenkrollen scharfe Rillen oder andere Beschädigungen in oder an den Laufflächen der Lenkrollen verursachen.

Vorzugsweise haben die Bremsflächen eine bremsfördernde Beschaffenheit. Beispielsweise können sie gummiert, gerillt oder aufgeraut, insbesondere gesandstrahlt, sein. Diese Strukturen erhöhen die Haftreibung zwischen Bremsfläche und Lauffläche und damit die Sicherheit der Feststellung der Lenkrollen und des mobilen Ständers an sich.

In Ausführungsformen des mobilen Ständers wird einer Bewegung des Betätigungselements aus einer ersten Endposition in eine zweite Endposition und umgekehrt eine zu überwindende Kraftwirkung entgegengesetzt. Dies bedeutet, dass das Betätigungselement in beiden Endpositionen stabil bleibt, weil in beiden Fällen eine Kraft vorhanden ist, die das Betätigungselement in der jeweiligen Endposition hält. Die Vorrichtung ist somit in der Fahrstellung und in der Bremsstellung selbstarretierend.

In einer Ausführungsform umfasst die Arretiervorrichtung eine vertikal verschiebbare Platte, in welche die ringförmigen Bremsstrukturen eingebettet sind. Dies bietet eine sehr einfache und robuste Lösung eines mobilen Ständers.

In alternativen Ausführungsformen umfasst die Arretiervorrichtung eine vertikal verschiebbare Platte, mit welcher die ringförmigen Bremsstrukturen über jeweils drei oder mehr vertikale Bolzen fest verbunden sind. Damit lässt sich ein Abstand zwischen der vertikal verschiebbaren Platte und den Lenkrollen herstellen, der beispielsweise Platz für Gewichte zur Stabilisierung des mobilen Ständers bietet. Mit einer solchen vertikal verschiebbaren Platte können alternativ auch zylindrische Bremsstrukturträger verbunden sein.

Vorteilhafterweise weist die Arretiervorrichtung eine oder mehrere Federn auf, insbesondere Spiralfedern, die die Arretiervorrichtung in die Richtung der Bremsstellung vorspannen, wobei insbesondere jeder der ringförmigen Bremsstrukturen eine oder mehrere der Federn zugeordnet sind, die auf sie einwirken. Damit ist in der Bremsstellung durch Federkraft abgesichert, dass die Lenkrollen arretiert werden. Die Bremskraft kann beispielsweise durch geeignete Auswahl der Federstärke eingestellt werden, um für die jeweilige Anwendung, beispielsweise die Gewichtsklasse des zu haltenden Gegenstands, die passende Bremskraft bereitzustellen. Dies lässt sich beispielsweise durch Versuche ermitteln.

In Ausführungsformen sind die Federn als Spiralfedern ausgebildet, die jeweils um einen von mehreren vertikalen Bolzen herum angeordnet sind, die die vertikal verschiebbare Platte der Arretiervorrichtung mit den ringförmigen Bremsstrukturen verbinden. Damit wird der durch die Bolzenverbindung vorhandene Platz ausgenutzt. Eines der Enden der Spiralfedern stützt sich dabei gegen ein nicht vertikal verschiebbares Element des mobilen Ständers ab, beispielsweise den Rollenträger. Ferner sind vorzugsweise jeder der ringförmigen Bremsstrukturen eine oder mehrere der Federn zugeordnet. Dadurch lässt sich die Anwendung der Federkraft über alle Lenkrollen gleichmäßig verteilen. Dies wird noch verbessert, wenn die von den Federn ausgeübte Federkraft an allen ringförmigen Bremsstrukturen bzw. an allen Lenkrollen gleich groß ist.

Die Federn können, je nach Anordnung der verschiedenen Elemente, als Druckfedern oder als Zugfedern eingesetzt sein.

In Ausführungsformen ist das Betätigungselement der Betätigungsvorrichtung, das insbesondere als eine Betätigungsstange ausgebildet ist, am Rollenträger angelenkt gelagert und zwischen einer ersten Endpositionen und einer zweiten Endposition schwenkbar, die der Fahrstellung und der Bremsstellung der Arretiervorrichtung entsprechen, wobei die Betätigungsvorrichtung ausgebildet ist, eine Schwenkbewegung des Betätigungselements in eine vertikale Verschiebung der ringförmigen Bremsstrukturen umzusetzen. Eine schwenkbare Betätigungsstange ist eine besonders einfach zu handhabende Möglichkeit der Betätigung, da sie in der Fahrstellung außerdem eine Handhabe zur Steuerung des mobilen Ständers bietet. Vorzugsweise befindet sich die Betätigungsstange in der Bremsstellung in einer vertikalen Position und in der Fahrstellung in einer schrägen Position, insbesondere zwischen 35° und 55°.

Das Betätigungselement ist in Ausführungsformen unterhalb seiner Schwenkachse und unterhalb des Rollenträgers gelenkig mit einem ersten Ende einer ersten Steuerstange oder ersten Enden mehrerer zueinander parallel verlaufender erster Steuerstangen verbunden, welche mit ihrem anderen Ende oder ihren anderen Enden gelenkig mit einer Gruppe von zwei oder mehr parallel zueinander ausgerichteten zweiten Steuerstangen auf einer gemeinsamen Schwenkachse über eine in der Schwenkachse angeordnete ersten Achsstange gelenkig verbunden sind, welche ihrerseits mit ihren anderen Enden an einer gegenüber dem Rollenträger fixen horizontalen zweiten Achsstange angelenkt sind, wobei insbesondere an der ersten Achsstange Druckrollen angeordnet sind, die von unten oder von oben auf ein mit den ringförmigen Bremsstrukturen verbundenes Teil der Arretiervorrichtung einwirken.

Ein solches mit den ringförmigen Bremsstrukturen verbundenes Teil kann beispielsweise eine zuvor genannte vertikal verschiebbare Platte der Arretiervorrichtung sein. Dadurch, dass die Druckrollen auf ein solches Teil, beispielsweise die verschiebbare Platte, von oben oder von unten einwirken, kann die Platte gegen eine Federkraft oder mit Unterstützung einer Federkraft vertikal bewegt werden. Die Druckrollen haben die Funktion, aus einer durch Betätigung des Betätigungselements entstehenden Bewegung der ersten Achsstange, die horizontale und vertikale Komponenten hat, nur die vertikale Bewegung an das vertikal verschiebbare Teil weiterzugeben. Die horizontale Komponente der Bewegung äußert sich darin, dass die Druckrollen an dem vertikal verschiebbaren Teil, beispielsweise der Platte, abrollen.

Die vertikale Bewegung der ringförmigen Bremsstrukturen ermöglicht zwei erfindungsgemäß umfasste Fälle, nämlich ein Bremsen von oben und ein Bremsen von unten. Im Fall des Bremsens von oben befinden sich die ringförmigen Bremsstrukturen oberhalb der horizontalen Laufrollenachsen der Lenkrollen und werden zum Bremsen vertikal nach unten bewegt. Im umgekehrten Fall des Bremsens von Unten befinden sich die ringförmigen Bremsstrukturen unterhalb der horizontalen Laufrollenachsen der Lenkrollen und werden zum Bremsen vertikal nach oben bewegt.

Eine in beiden Endpositionen selbstarretierende Ausführungsform sieht vor, dass bei Bewegung des Betätigungselements die zweiten Steuerstangen aus einer schrägen Position durch eine vertikale Position hindurch in eine entgegengesetzt schräge Position und umgekehrt bewegt werden. Die vertikale Position der zweiten Steuerstangen entspricht einem maximalen vertikalen Hub, was einer maximalen Auslenkung der Federn entsprechen kann. In beiden Endpositionen ist die vertikale Auslenkung geringer als in der Mittelposition, so dass die Arretiervorrichtung, ebenso wie die Betätigungsvorrichtung, in ihrer jeweiligen Endposition verharren, wenn keine weitere Kraft aufgewendet wird.

Vorzugsweise weist der Rollenträger Halterungen für Gewichte auf, in die insbesondere Gewichte eingelegt sind.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1, 2: schematische Seitenansichten eines ersten Ausführungsbeispiels eines mobilen Ständers in der Bremsstellung bzw. in der Fahrstellung,
- Fig. 3: eine schematische Ansicht der Unterseite eines zweiten Ausführungsbeispiels eines mobilen Ständers,
- Fig. 4: eine schematische Detailaufsicht auf eine ringförmige Bremsstruktur,
- Fig. 5, 6: schematische Seitenansichten des zweiten Ausführungsbeispiels eines mobilen Ständers in der Bremsstellung und in der Fahrstellung,
- Fig. 7, 8: schematische technische Seitenansichten eines dritten Ausführungsbeispiels eines mobilen Ständers in der Bremsstellung und in der Fahrstellung,
- Fig. 9, 10: vergrößerte technische Seitenansichten des dritten Ausführungsbeispiels eines mobilen Ständers in der Bremsstellung und in der Fahrstellung,
- Fig. 11: eine schematische, perspektivische Ansicht der Unterseite des dritten Ausführungsbeispiels eines mobilen Ständers,
- Fig. 12, 13: Detaildarstellungen der Umsetzungsmechanik des dritten Ausführungsbeispiels in der Bremsstellung und in der Fahrstellung, und
- Fig. 14, 15: Detaildarstellungen der Lenkrollen und Bremsstrukturen des dritten Ausführungsbeispiels in der Bremsstellung und in der Fahrstellung.

In den Zeichnungen sind jeweils gleiche oder gleichartige Elemente und/oder Teile mit denselben Bezugsziffern versehen, so dass von einer erneuten Vorstellung jeweils abgesehen wird.

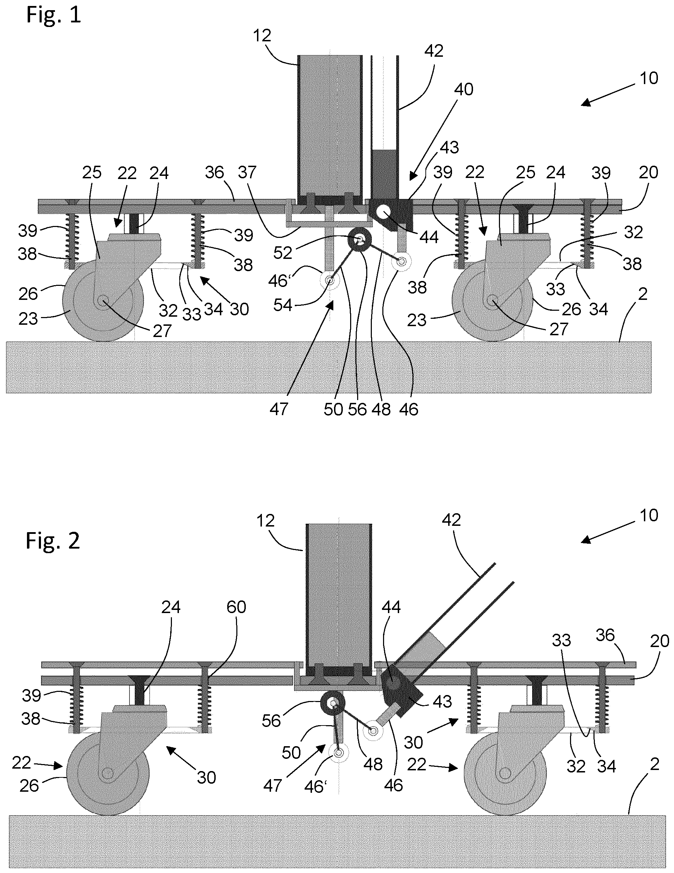

Die Figuren 1 und 2 zeigen schematische Seitenansichten eines ersten Ausführungsbeispiels eines mobilen Ständers 10 in der Bremsstellung (Fig. 1) bzw. in der Fahrstellung (Fig. 2). Der mobile Ständer 10 hat eine Aufnahme 12 für einen zu haltenden Gegenstand. Bei der Aufnahme 12 kann es sich beispielsweise um ein Halterohr für einen Mast eines Sonnenschirms handeln.

Das tragende Element des mobilen Ständers 10 ist ein Rollenträger 20 in Form einer Platte. An dem Rollenträger 20 sind neben der Aufnahme 12 auch mehrere Lenkrollen 22 befestigt, deren Laufrollen 23 mit ihren Laufflächen 26 auf einem Untergrund 2 abrollen. Die Lenkrollen 22 tragen den Rollenträger 20 und damit den mobilen Ständer 10 insgesamt. Die Lenkrollen 22, auch Castor-Rollen genannt, sind um eine vertikale Schwenkachse 24 schwenkbare Rollen, die als nicht angetriebene Stützräder dienen, die in der Lage sind, sich selbstständig zur aktuellen Bewegungsrichtung auszurichten. Dazu laufen die eigentlichen Laufrollen 23 der Lenkrollen 22 um horizontale Laufrollenachsen 27, die sich mit den vertikalen Schwenkachsen 24 der Lenkrollen 22 nicht schneiden. Die Laufrolle 23 einer Lenkrolle 22 wird mittels eines Lenkrollenhalters 25 mit der vertikalen Schwenkachse 24 verbunden.

Zur Bremsung der Lenkrollen 22 verfügt der mobile Ständer 10 über eine Arretiervorrichtung 30, die für jede der Lenkrollen 22 einen Bremsstrukturträger mit einer ringförmigen Bremsstruktur 33 umfasst, die in den Fig. 1 und 2 in einer Seitenansicht dargestellt sind. In diesem Ausführungsbeispiel handelt es sich bei den Bremsstrukturträgern um Bremsplatten 32 mit einer kreisförmigen Öffnung, so dass die ringförmigen Bremsstrukturen 33 als ringförmige Innenkonturen in den Bremsplatten 32 ausgebildet sind. Diese kreisförmigen Öffnungen sind auf die vertikalen Schwenkachsen 24 der Lenkrollen 22 zentriert angeordnet und weisen an ihren Innenkanten im dargestellten Ausführungsbeispiel schräggestellte Bremsflächen 34 auf, die in der in Fig. 1 gezeigten Bremsstellung in Kontakt mit den Laufflächen 26 der Lenkrollen 22 kommen. Die Neigung entspricht der Neigung der Lauffläche 26 der Laufrolle 23 der Lenkrolle 22 an der Stelle, an der die Bremsfläche 34 die Lauffläche 26 berührt. Diese Bremsfläche 34 kann beispielsweise die Tangente an die Lauffläche 26 sein, oder eine konkave Form haben mit einer Rundung, die an den Krümmungsradius der Laufflächen 26 der Lenkrollen 22 angepasst ist. Anstelle von Bremsflächen 34 können die Bremsstrukturen 33 auch als Kanten ausgebildet sein, auch als Kanten mit Riffelungen, die Schwenkbewegungen der Lenkrollen 22 wirksam unterbinden.

Die Bremsplatten 32 sind mittels jeweils mehrerer Bolzen 38 mit einer vertikal verschiebbaren Platte 36 verbunden, welche durch Öffnungen 60 im Rollenträger 20 geführt sind. Federn 39 in Form von Spiralfedern umgeben die Bolzen 38 und stützen sich dabei einerseits an der Unterseite des Rollenträgers 20 und andererseits an der Oberseite der Bremsplatten 32 ab. Die Spiralfedern sind als Druckfedern eingesetzt und drücken die Bremsplatten 32 mit ihren Bremsflächen 34 auf die Laufflächen 26 der Lenkrollen 22, wie in Fig. 1 gezeigt. Damit werden die Lenkrollen 22 in einer Bewegung sowohl bezüglich der vertikalen Schwenkachse 24 als auch bezüglich der horizontalen Laufrollenachse 27 fixiert. In dieser Position liegt ein Großteil der Platte 36 der Arretiervorrichtung 30 auf dem Rollenträger 20 auf.

Ein zentraler Teil 37 der Arretiervorrichtung 30 befindet sich unterhalb des Rollenträgers 20. Bei diesem zentralen Teil 37 handelt es sich ebenfalls um eine Platte, die mit der Platte 36 oberhalb des Rollenträgers 20 fest verbunden ist und zusammen mit dieser vertikal verschiebbar ist. Die Verbindung des zentralen Teils 37 mit der Platte erfolgt über ein oder mehrere Verbindungselemente, beispielsweise Bolzen, die durch Öffnungen im Rollenträger 20 hindurchgeführt sind.

An diesem zentralen Teil 37 der Arretiervorrichtung 30 greift eine Umsetzungsmechanik 47 der Betätigungsvorrichtung 40 des mobilen Ständers 10 an. Diese Umsetzungsmechanik 47 wird mittels eines Betätigungselements 42 bedient, im in Fig. 1 und 2 gezeigten Fall einer als Schwenkhebel ausgebildeten Betätigungsstange 42. Diese ist über eine horizontale Schwenkachse 44 schwenkbar am Rollenträger 20 gelagert. Dazu umfasst das Betätigungselement 42 einen Schwenkklotz 43, mit dem das Betätigungselement 42 verbunden ist. An der Unterseite des Schwenkklotzes 43 befindet sich eine Augenschraube 46, also eine Schraube, deren Ende als Auge mit einer durchgehenden Öffnung ausgebildet ist, die in diesem Fall etwas seitlich gegenüber der Betätigungsstange versetzt angeordnet ist. Durch das Auge der Augenschraube 46 ist eine Achse gesteckt, auf der eine erste Steuerstange 48 mit einem ersten Ende aufsitzt, so dass sich an dieser Stelle eine Gelenkverbindung mit horizontaler Schwenkachse ergibt. Anstelle von Augenschrauben können auch andere Haltemittel, beispielsweise Bolzen oder Blöcke mit durchgehenden Öffnungen für eine Achse verwendet werden.

Die erste Steuerstange 48 geht über eine weitere Gelenkverbindung über eine erste Achsstange 52 in eine zweite Steuerstange 50 über, welche an ihrem entgegengesetzten Ende wiederum gelenkig, über eine zweite Achsstange 54, mit dem Auge einer weiteren Augenschraube 46' verbunden ist, welche ihrerseits am Rollenträger 20 befestigt ist. Die Gelenkverbindung zwischen der ersten Steuerstange 48 und der zweiten Steuerstange 50 weist in diesem Ausführungsbeispiel nach oben. Auf der ersten Achsstange 52, die durch diese Gelenkverbindung verläuft, sitzen Druckrollen 56 auf, die von unten gegen den zentralen Teil 37 der Platte 36 der Arretiervorrichtung 30 drücken, um diese vertikal zu verschieben.

Fig. 1 und 2 zeigen, dass dann, wenn das Betätigungselement 42 aus seiner vertikalen Position (Fig. 1) in eine schräge Position (Fig. 2) bewegt wird, der Abstand zwischen den Augenschrauben 46, 46` verkleinert wird. Dadurch werden die ersten und zweiten Steuerstangen 48, 50 nach oben gedrückt, so dass die Druckrollen 56 die Platte 36 und die Bremsplatten 32 mit den ringförmigen Bremsstrukturen 33 anheben (Fig. 2). Dadurch ergibt sich die Fahrstellung, in der die Lenkrollen 22 ungebremst sind. Die Federn 39 werden dabei zusammengedrückt.

Wie ebenfalls in Fig. 2 zu sehen ist, ist in der Fahrstellung die zweite Steuerstange 50, welche in der Bremsstellung in Fig. 2 noch gegenüber der Vertikalen nach rechts verschwenkt war, nunmehr gegenüber der Vertikalen leicht nach links verschwenkt. Dies bedeutet, dass die Platte 36 nicht in ihrer obersten Position und die Federn 39 nicht in ihrer maximalen Auslenkung sind. Dies bedeutet, dass sichergestellt ist, dass die Fahrposition nicht von selbst verlassen wird, weil hierzu die Überwindung der Kraft in Gegenrichtung notwendig wäre.

Gleichzeitig liegt der zentrale Teil 37 der Platte 36 flächig an der Unterseite des Rollenträgers 20 an, so dass eine ausgewogene Ausrichtung sichergestellt ist, in der keine der ringförmigen Bremsstrukturen 32 Kontakt mit einer Lenkrolle 22 hat, also alle Lenkrollen frei zum Rollen und zum Ausrichten in Bezug auf eine momentane Bewegungsrichtung des mobilen Ständers 10 sind.

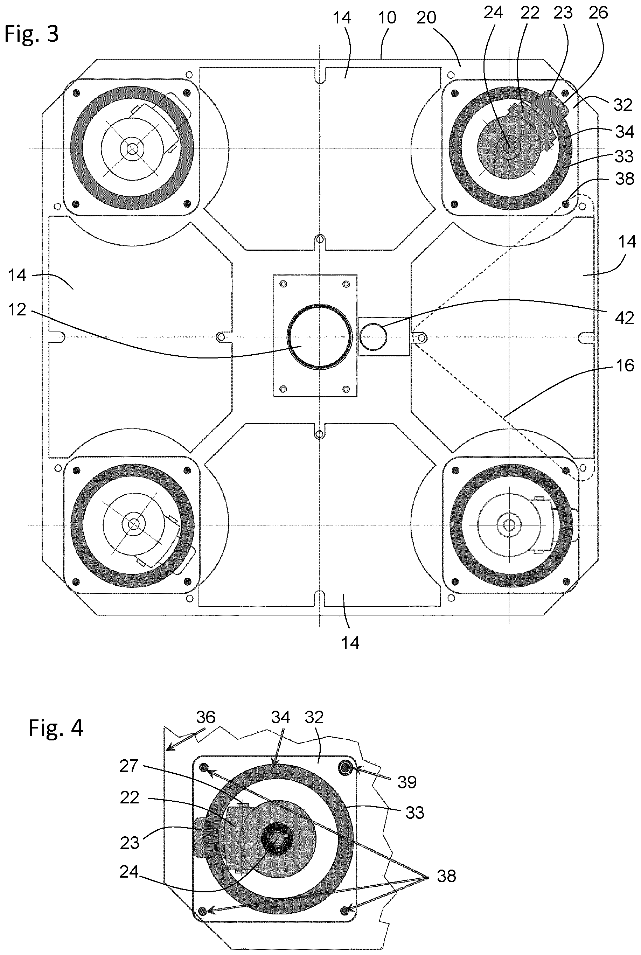

Fig. 3 zeigt eine schematische Ansicht der Unterseite eines zweiten Ausführungsbeispiels eines mobilen Ständers 10. Der mobile Ständer 10 hat eine im Wesentlichen rechteckige Grundfläche, die hier durch die Platte des Rollenträgers 20 gegeben ist. An den vier Ecken des Rollenträgers sind Lenkrollen 22 angeordnet, deren Schwenkachsen 24 und Laufrollen 23 ebenfalls dargestellt sind. Die Lenkrollen 22 des mobilen Ständers 10 befinden sich in Fig. 3 in verschiedenen Ausrichtungen.

Ebenfalls dargestellt sind zentral die Aufnahme 12, beispielsweise für einen Sonnenschirm, und das Betätigungselement 42, jeweils im Querschnitt.

Die ringförmigen Bremsstrukturen 33 mit umlaufenden Bremsflächen 34 in den Bremsplatten 32 sind bezüglich der Schwenkachsen 24 der Lenkrollen 22 zentriert angeordnet. Durch ihre Ausgestaltung sind die ringförmigen Bremsstrukturen 33 in der Lage, die Lenkrollen 22 in jeder beliebigen momentanen Ausrichtung der Lenkrollen 22 festzusetzen und zu verhindern, dass die Lenkrollen 22 weiter rollen oder verschwenken können.

Zwischen jeweils zwei der Lenkrollen 22 befindet sich jeweils ein Gewicht 14, dessen Konturen so angepasst sind, dass sie den Lenkrollen 22 nicht in die Quere kommen. Ein Halter 16 für Gewichte ist gestrichelt dargestellt. Dieser kann mit dem Rollenhalter 20 verbunden werden, beispielsweise über Bolzen oder Schrauben in den Ecken des Halters.

Fig. 4 zeigt eine schematische Detailsicht auf eine Bremsplatte 32. Diese weist eine kreisförmige Öffnung auf, deren Innenkontur die ringförmige Bremsstruktur 33 darstellt. Deren Rand ist in diesem Ausführungsbeispiel als Bremsfläche 34 ausgebildet und kann mit einer bremsfördernden Oberfläche ausgebildet sein. Eine solche bremsfördernde Oberfläche kann beispielsweise eine gummierte oder eine gesandstrahlte Oberfläche sein, die durch ihre Strukturierung eine erhöhte Haftreibung aufweist.

Vorzugsweise sind die Kanten der Bremsfläche 34 abgerundet, um keine permanenten Abdrücke, beispielsweise Rillen, in der Lauffläche 26 der Laufrollen 23 der Lenkrollen 22 zu hinterlassen. Sehr gut zu sehen ist auch, dass die kreisrunde ringförmige Bremsfläche 34 auf die vertikale Schwenkachse 24 der Lenkrolle 22 zentriert ist und somit in jeder Ausrichtung der Lenkrolle 22 eine gleichartige und sichere Bremsung der Lenkrolle 22 gewährleistet ist. Der Innenradius der Bremsfläche 34 ist zumindest so groß, dass die Bremsfläche 34 nicht mit dem Lenkrollenhalter 25 der Lenkrolle 22 in Berührung kommt.

Alternativ kann die Innenkontur auch als scharfe Kante oder als geriffelte Kante ausgebildet sein.

An den vier Ecken der Platte, die die ringförmige Bremsstruktur 32 bildet, sind jeweils Bolzen 38 angeordnet, die die ringförmige Bremsstruktur 32 mit der Platte 36 der Arretiervorrichtung 30 verbinden. Einer der Bolzen 38 ist mit einer Feder 39 versehen, in diesem Fall einer Spiralfeder, wie sie beispielsweise in den Figuren 1 und 2 von der Seite dargestellt war. Bezogen auf die Fig. 3 handelt es sich bei der Bremsstruktur 32 in Fig. 4 um die unten links in Fig. 3 gezeigte Bremsstruktur 32 und Lenkrolle 22. Der mit der Feder 39 versehene Bolzen 38 ist somit der in Bezug auf den mobilen Ständer 10 am weitesten innen gelegene Bolzen 38. Um eine gleichmäßige Verteilung der Stellkräfte zur Verschiebung der Arretiervorrichtung 30 zu erreichen, sind in einem solchen Fall die Federn 39 bei den vier Bremsstrukturen 32 in einer symmetrischen Art und Weise zu verteilen, also jeweils am in Bezug auf den mobilen Ständer 10 innersten Bolzen 38.

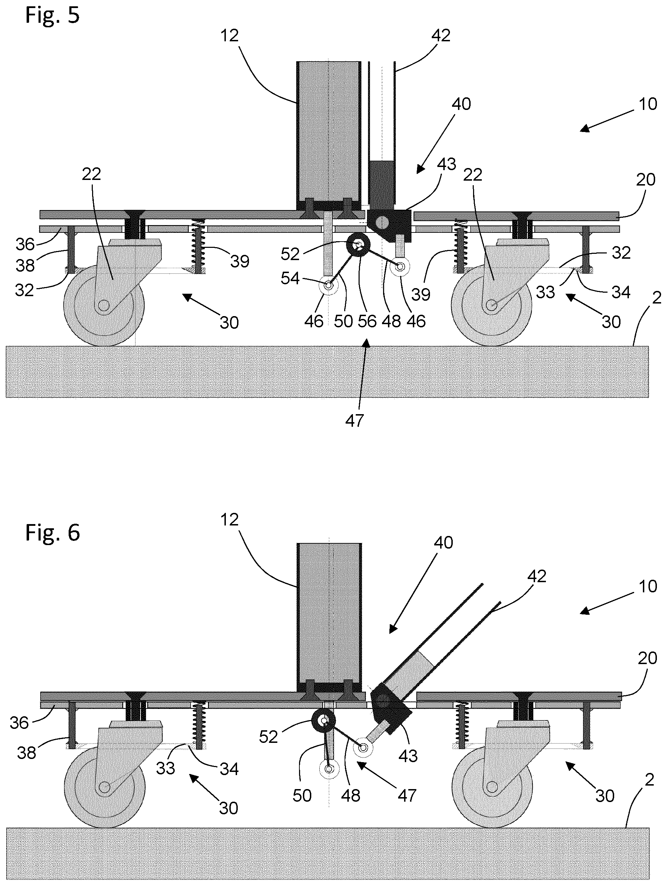

Die Figuren 5 und 6 zeigen schematische Seitenansichten eines zweiten Ausführungsbeispiels eines mobilen Ständers in der Bremsstellung (Fig. 5) und in der Fahrstellung (Fig. 6). Die Unterschiede in Bezug auf das erste Ausführungsbeispiel der Figuren 1 und 2 liegen hauptsächlich in der Beschaffenheit der Arretiervorrichtung 30. Diese umfasst in diesem Fall eine vertikal verschiebbare Platte 36, welche sich vollständig unterhalb des Rollenträgers 20 befindet. Insofern sind auch die Bolzen 38, welche die ringförmigen Bremsstrukturen 32 mit der Platte 36 der Arretiervorrichtung 30 verbinden, kürzer als im ersten Ausführungsbeispiel.

Wie in den Figuren 5 und 6 auch erkennbar ist, befindet sich in der Bremsstellung (Fig. 5) ein Abstand zwischen der Platte 36 der Arretiervorrichtung 30 und dem Rollenträger 20, während die Platte 36 in der Fahrstellung (Fig. 6) an dem Rollenträger 20 anliegt. Ebenfalls ist erkennbar, dass auch in diesem Ausführungsbeispiel die Betätigungsvorrichtung 40 in beiden Endpositionen selbstarretierend ist, erkennbar daran, dass die zweite Steuerstange 50 auf dem Weg von der einen Endposition zu anderen Endposition und umgekehrt jeweils eine vertikale Ausrichtung durchläuft, in welcher ein maximaler Druck erreicht wird. Es muss also Kraft aufgewendet werden, um die Arretiervorrichtung 40 aus ihrer jeweiligen Endposition heraus zu bewegen.

Wie bereits in Fig. 4 gezeigt, ist zu jeder der Lenkrolle 22 und ringförmige Bremsstruktur 32 jeweils ein Bolzen 38 mit einer Feder 39 versehen. In diesem Fall ist der Bolzen 38 nicht mit der Platte 36 verbunden, sondern dient als Zentrierungsbolzen für die Feder 39. Die Stabilität ist durch die weiteren Bolzen 38 sichergestellt. Alternativ kann auch eine symmetrische Anordnung von vier tragenden Bolzen 38 vorgesehen sein, wobei die Feder separat von den vier tragenden Bolzen 38 an einem weiteren, lediglich einseitig befestigten Bolzen angeordnet ist, oder eine Anordnung von drei tragenden Bolzen 38 in einer gleichseitigen dreieckigen Konfiguration, mit einem weiteren, freien Bolzen als Zentrierungsbolzen für die Feder 39. In den letzten beiden Alternativen ist die äußere Form der ringförmigen Bremsstruktur 32 an die Konfiguration der verschiedenen Bolzen 38 anzupassen.

Diese Ausführungsform kommt ohne Durchführung von einer oberen Platte 36 zu einem zentralen Teil 37 durch den Rollenhalter 20 aus und ist kompakter, weil es oberhalb des Rollenhalter 20 keine vertikal beweglichen Teile der Arretiervorrichtung 30 gibt. Die Umsetzung der Mechanik 47 entspricht im Übrigen derjenigen des ersten Ausführungsbeispiels.

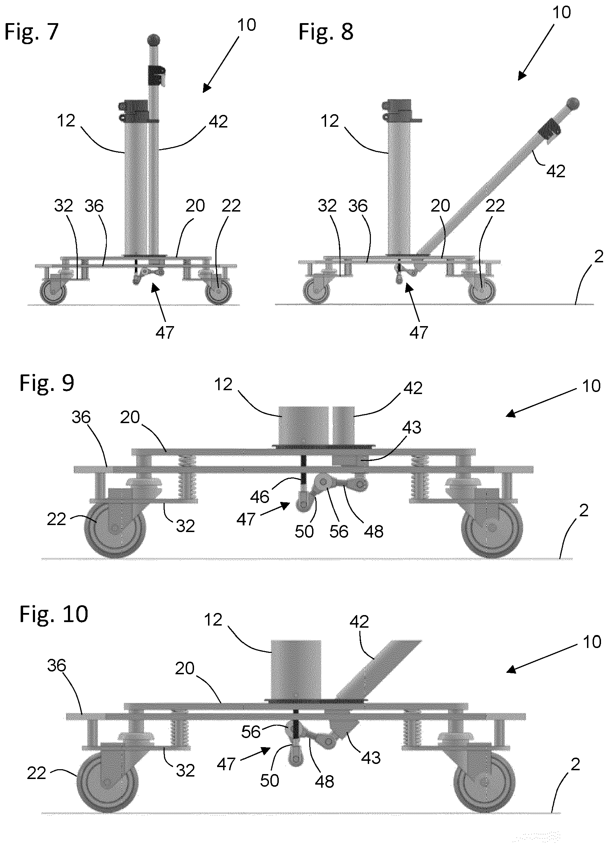

In den Figuren 7 und 8 sind schematische technische Seitenansichten eines dritten Ausführungsbeispiels gezeigt, und zwar in einer Bremsstellung (Fig. 7) und einer Fahrstellung (Fig. 8). Das dritte Ausführungsbeispiel ähnelt im Grundsatz dem zweiten Ausführungsbeispiel, jedoch ist der Rollenträger 20 in seiner Breite weniger ausgedehnt als die Platte 36 der Arretiervorrichtung 30. Die Halterung 12 für einen zu haltenden Gegenstand ist als Rohr ausgeführt mit einem Klemmmechanismus an seinem oberen Ende. Damit lassen sich beispielsweise die Masten von Sonnenschirmen befestigen. Das Betätigungselement 42 ist als Teleskopstange ausgebildet, die über ein Teleskopteil verlängerbar ist und in einem Knauf am Ende der Teleskopstange endet.

Der untere Teil des mobilen Ständers 10 ist in den Figuren 9 und 10 besser zu sehen, welche vergrößerte technische Seitenansichten des zweiten Ausführungsbeispiels in der Bremsstellung (Fig. 9) und in der Fahrstellung (Fig. 10) zeigen. In den Seitenansichten ist erkennbar, dass die Steuerstangen 48, 50 jeweils an ihren Enden Gelenkaugen aufweisen, durch die Gelenkachsen hindurchgeführt sind. Auf der mittleren der drei Gelenkachsen, d. h. der ersten Achsstange 52, sitzen Druckrollen 56 auf, welche die Unterseite der Platte 36 der Arretiervorrichtung 30 kontaktieren und die vertikale Komponente der Bewegung der Umsetzungsmechanik 47 an dieser Stelle auf die Platte 36 und damit auf die Bremsstrukturen 32 übertragen. Die Druckrollen 56 vollziehen dabei auch eine horizontale Bewegungskomponente, die keinen Einfluss auf die Bewegung der Platte 36 hat, da die Druckrollen 56 unterhalb der Platte 36 abrollen. So wird keine Querkomponente der Bewegung auf die Platte 36 übertragen.

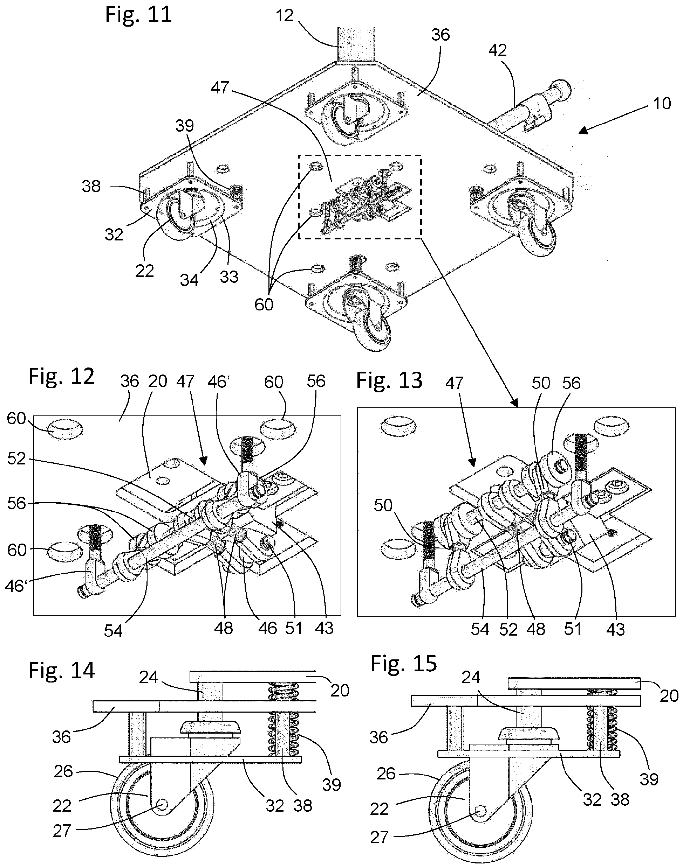

Fig. 11 zeigt eine schematische, perspektivische Ansicht der Unterseite des dritten Ausführungsbeispiels eines mobilen Ständers 10. Die Unterseite wird dominiert von der vertikal verschiebbaren Platte 36 der Arretiervorrichtung 30, welche den darüber angeordneten Rollenträger 20 perspektivisch verdeckt. Sichtbar sind allerdings der Halter 12 sowie das Betätigungselement 42 in der Endposition für die Fahrstellung. Entsprechend befinden sich die Bremsstrukturen 32 in einer oberen Position, in der sie die Lenkrollen 22 nicht kontaktieren, die somit in ihrer Bewegung vollständig frei sind.

Die Konfiguration der ringförmigen Bremsstrukturen 32 mit den hier perspektivisch erkennbaren Bremsflächen 34 ist die zuvor beschriebene, bei der jeweils der nach innen weisende Bolzen 38 mit einer Feder 39 versehen ist. Es sind außerdem innerhalb der Platte 36 mehrere Öffnungen 60 für Bolzen dargestellt, mit denen Halterungen für Gewichte befestigt werden können, wie sie in Fig. 3 angedeutet sind.

Im zentralen Teil der Fig. 11 erkennt man die Umsetzungsmechanik 47, die im Detail in den Figuren 12 (Bremsstellung) und 13 (Fahrstellung) vergrößert dargestellt ist. In der Richtung der Wirkung von Bewegungen des Betätigungselements 42 fortschreitend ist zunächst der Schwenkklotz 43 zu sehen, an dessen oberen Ende das Betätigungselement 42 angebracht ist. Am unteren Ende des Schwenkklotzes 43 ist eine erste Augenschraube 46 angebracht, von der in den Figuren 12 und 13 nur das Augenteil sichtbar ist. Durch das Auge des Augenteils der ersten Augenschraube 46 ist eine kurze Achsstange 51 geführt, auf die beidseits der ersten Augenschraube 46 Augenenden zweier paralleler erster Steuerstangen 48 aufgesetzt und mit Muttern gesichert sind. Die ersten Steuerstangen 48 können damit um die von der kurzen Achsstange 51 definierte Achse verschwenkt werden.

Die anderen Enden der ersten Steuerstangen 48 weisen ebenfalls Augen auf, durch die eine erste Achsstange 52 geführt ist, welche länger ist als die kurze Achsstange 51. Diese erste Achsstange 52 ist besonders in Fig. 13 gut zu erkennen. In Fig. 12 ist sie perspektivisch teilweise verdeckt. Auf der ersten Achsstange 52 sitzen beiderseits der beiden ersten Steuerstangen 48 die Augen von zwei zweiten Steuerstangen 50 auf, die jeweils von zwei Druckrollen 56 flankiert sind, welche ebenfalls auf der ersten Achsstange 52 aufsitzen. Die Druckrollen 56 sind drehbar auf der ersten Achsstange 52 angeordnet und auch die zweiten Steuerstangen 50 können um die von der ersten Achsstange 52 definierte Achse schwenken.

Die jeweils anderen Enden der zweiten Steuerstangen 50 weisen wiederum Augen auf, durch welche eine zweite Achsstange 54 verläuft, die wiederum länger ist als die erste Achsstange 52 und an ihren beiden Enden durch die Augen von zwei zweiten Augenschrauben 46` verlaufen, welche ihrerseits mit dem Rollenträger 20 fest verbunden sind und sich daher gegenüber dem mobilen Ständer 10 insgesamt nicht bewegen. Die zweite Achsstange 52 bildet somit einen Fixpunkt für die Umsetzungsmechanik 47. Auch die zweite Achsstange 52 ist mit Muttern oder anderen geeigneten Sicherungsmitteln wie beispielsweise Federsplinten davor gesichert, aus den Augen der zweiten Augenschrauben 46' heraus zu gleiten.

Insgesamt ergibt sich eine Konfiguration, die von der Seite der ersten Augenschraube 46 zu der Seite der zweiten Augenschraube 46` immer breiter wird und jeweils zwei parallele erste Steuerstangen 48 und zweite Steuerstangen 50 aufweist. Diese befinden sich in Fig. 12 in der Bremsstellung in einer gestreckten Konfiguration mit einem flachen Winkel nach oben, bei der die Druckrollen 56 Kontakt mit der Unterseite der Platte 36 der Arretiervorrichtung 30 haben. In Fig. 13 befindet sich zwischen den ersten und zweiten Steuerstangen 48, 50 ein späterer Winkel nach oben und wie Druckrollen 56 drücken die Platte 36 vertikal nach oben.

Die Figuren 14 und 15 zeigen entsprechende Detaildarstellungen der Lenkrollen 22 und Bremsstrukturen 32 des dritten Ausführungsbeispiels in der Bremsstellung (Fig. 14) und in der Fahrstellung (Fig. 15). In der Bremsstellung ist die Platte 36 der Arretiervorrichtung 30 vertikal nach unten gedrückt, sodass die Bremsflächen 34 der ringförmigen Bremsstruktur 33 in den Bremsplatten 32 gegen die Lauffläche 26 der ihr zugeordneten Lenkrolle 22 gedrückt wird und diese festsetzt. In diesem Zustand kann die Lenkrolle 22 weder rollen noch um ihre vertikale Schwenkachse 24 verschenkt werden. Es befindet sich ein Abstand zwischen der Platte 36 und dem Rollenträger 20. In der in Fig. 15 gezeigten Fahrstellung ist die Platte 36 mit der Bremsplatte 32 nach oben bewegt worden und die Bremsfläche 34 der ringförmigen Bremsstruktur 33 hat keinen Kontakt mit der Lenkrolle 22 mehr. Diese kann sich somit frei um ihre beiden Achsen bewegen, also sowohl verschwenkt werden als auch rollen. Die Feder 39 ist dabei komprimiert worden, sie bietet eine Vorspannung in Richtung der Bremsstellung.

Eine umgekehrte Konfiguration ist auch möglich, bei der die Bremsplatte 32 mit der ringförmigen Bremsstruktur 33 unterhalb der Laufrollenachse 27 angeordnet ist. In diesem Fall wird die Bremsstellung durch eine Anhebung der Bremsplatte 32 eingenommen. Damit geht einher, dass die Bremsflächen 34 der ringförmigen Bremsstruktur 33 nach oben weisen und es sich bei der Feder 39 um eine Zugfeder handelt, die eine Vorspannung in Richtung auf die Bremsstellung bewirkt. Die Umsetzungsmechanik 47 kann dabei im Wesentlichen in gleicher Weise wie in den anderen Ausführungsbeispielen ausgeführt sein, mit dem Unterschied, dass die ersten und zweiten Steuerstangen 48, 50 nicht einen Winkel nach oben, sondern einen Winkel nach unten beschreiben. Besonders geeignet ist dabei eine Ausführung der Arretiervorrichtung 30, die derjenigen des ersten Ausführungsbeispiels der Figuren 1 und 2 ähnelt, in dem ein zentraler Teil 37 der Platte 36 unterhalb des Rests der Platte 36 angeordnet ist und die Druckrollen 56 der Umsetzungsmechanik 47 von oben auf den zentralen Teil 37 wirken, um diesen entgegen der Kraft der Zugfedern aus der Bremsstellung in die Fahrstellung zu bewegen, in der die ringförmige Bremsstruktur 33 nach unten versetzt angeordnet ist, um die Lenkrollen 22 freizugeben. Bis auf den zentralen Teil 37 kann die Platte 36 dabei entweder oberhalb oder unterhalb des Rollenhalters 20 angeordnet sein.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Untergrund
- 10: Mobiler Ständer
- 12: Aufnahme
- 14: Gewichte
- 16: Halterung für Gewicht
- 20: Rollenträger
- 22: Lenkrollen
- 23: Laufrollen
- 24: vertikale Schwenkachse
- 25: Lenkrollenhalter
- 26: Lauffläche
- 27: Laufrollenachse
- 30: Arretiervorrichtung
- 32: Bremsplatte
- 33: ringförmige Bremsstruktur
- 34: Bremsfläche
- 36: Platte
- 37: zentraler Teil
- 38: Bolzen
- 39: Federn
- 40: Betätigungsvorrichtung
- 42: Betätigungselement
- 43: Schwenkklotz
- 44: Schwenkachse des Betätigungselements
- 46, 46`: Augenschraube
- 47: Umsetzungsmechanik
- 48: erste Steuerstange
- 50: zweite Steuerstange
- 51: kurze Achsstange
- 52: erste Achsstange
- 54: zweite Achsstange
- 56: Druckrolle
- 60: Öffnung für Bolzen

## Patentansprüche

1. Mobiler Ständer (10) für einen zu haltenden Gegenstand, umfassend einen Rollenträger (20) mit drei oder mehr Lenkrollen (22), eine mit dem Rollenträger (20) verbundene Aufnahme (12), über die der zu haltende Gegenstand mit dem mobilen Ständer (10) koppelbar ist, eine Arretiervorrichtung (30), die ausgebildet ist, den Rollenträger (20) gegenüber dem Untergrund (2) ortsfest zu arretieren, und eine Betätigungsvorrichtung (40) mit einem Betätigungselement (42), die mit der Arretiervorrichtung (30) verbunden und ausgebildet ist, bei Betätigung des Betätigungselements (42) die Arretiervorrichtung (30) reversibel zwischen einer Fahrstellung und einer Bremsstellung zu bewegen, **dadurch gekennzeichnet, dass** die Arretiervorrichtung (30) zu jeder der drei oder mehr Lenkrollen (22) jeweils eine mit der Arretiervorrichtung (30) fest verbundene und auf eine vertikale Schwenkachse (24) der ihr jeweils zugeordneten Lenkrolle (22) zentrierte horizontal ausgerichtete ringförmige Bremsstruktur (33) aufweist und beim Übergang von der Fahrstellung zur Bremsstellung und umgekehrt jeweils eine vertikale Verschiebung erfährt, wobei die ringförmigen Bremsstrukturen (33) in der Fahrstellung keinen Kontakt mit den Lenkrollen (22) haben, während sie in der Bremsstellung die Laufflächen (26) der ihnen zugeordneten Lenkrollen (22) unabhängig von deren momentanen Schwenkpositionen mit einer Haltekraft beaufschlagen und sowohl Rollbewegungen als auch Schwenkbewegungen der Lenkrollen (22) behindern.

2. Mobiler Ständer (10) nach Anspruch 1, **dadurch gekennzeichnet, dass** die ringförmigen Bremsstrukturen (33) in oder an einem Bremsstrukturträger ausgebildet, insbesondere als Innenkonturen von kreisförmigen Öffnungen in einer gemeinsamen Platte (36) oder in separaten, jeweils einer Lenkrolle (22) zugeordneten Bremsplatten (32) oder als Endkanten von vertikal orientierten zylindrischen Strukturen ausgebildet sind.

3. Mobiler Ständer (10) nach Anspruch 1 oder 2, **dadurch gekennzeichnet, dass** die ringförmigen Bremsstrukturen (33) im radialen Querschnitt scharfe oder abgerundete Kanten aufweisen, insbesondere mit einer Riffelung.

4. Mobiler Ständer (10) nach Anspruch 1 oder 2, **dadurch gekennzeichnet, dass** die ringförmigen Bremsstrukturen (33) im radialen Querschnitt abgeschrägte und/oder konkav gerundete Bremsflächen (34) aufweisen, wobei insbesondere die Neigung und/oder Rundung der Bremsflächen (34) zu einer Neigung und/oder einem konvexen Radius der Lauffläche (26) der Lenkrolle (22) an der zu kontaktierenden Stelle passt.

5. Mobiler Ständer (10) nach Anspruch 4, **dadurch gekennzeichnet, dass** die Enden der Bremsflächen (34) im radialen Querschnitt abgerundete Kanten aufweisen oder ein konvexer Radius der Bremsflächen (34) größer ist als ein Radius der Laufflächen (26) der Lenkrollen (22).

6. Mobiler Ständer (10) nach Anspruch 4 oder 5, **dadurch gekennzeichnet, dass** die Bremsflächen (34) eine bremsfördernde Beschaffenheit haben, insbesondere gummiert, gerillt oder aufgeraut, insbesondere gesandstrahlt, sind.

7. Mobiler Ständer (10) nach einem der Ansprüche 1 bis 6, **dadurch gekennzeichnet, dass** einer Bewegung des Betätigungselements (42) aus einer ersten Endposition in eine zweite Endposition und umgekehrt eine zu überwindende Kraftwirkung entgegengesetzt wird.

8. Mobiler Ständer (10) nach einem der Ansprüche 1 bis 7, **dadurch gekennzeichnet, dass** die Arretiervorrichtung (30) eine oder mehrere Federn (39), insbesondere Spiralfedern, aufweist, die die Arretiervorrichtung (30) in die Richtung der Bremsstellung vorspannen, wobei insbesondere jeder der ringförmigen Bremsstrukturen (33) eine oder mehrere der Federn (39) zugeordnet sind, die auf sie einwirken.

9. Mobiler Ständer (10) nach einem der Ansprüche 1 bis 8, **dadurch gekennzeichnet, dass** das Betätigungselement (42) der Betätigungsvorrichtung (40), das insbesondere als eine Betätigungsstange ausgebildet ist, am Rollenträger (20) angelenkt gelagert und zwischen einer ersten Endpositionen und einer zweiten Endposition schwenkbar ist, die der Fahrstellung und der Bremsstellung der Arretiervorrichtung (30) entsprechen, wobei die Betätigungsvorrichtung (40) ausgebildet ist, eine Schwenkbewegung des Betätigungselements (42) in eine vertikale Verschiebung der ringförmigen Bremsstrukturen (33) umzusetzen.

10. Mobiler Ständer (10) nach Anspruch 9, **dadurch gekennzeichnet, dass** das Betätigungselement (42) unterhalb seiner Schwenkachse (44) und unterhalb des Rollenträgers (20) gelenkig mit einem ersten Ende einer ersten Steuerstange (48) oder ersten Enden mehrerer zueinander parallel verlaufender erster Steuerstangen (48) verbunden ist, welche mit ihrem anderen Ende oder ihren anderen Enden gelenkig mit einer Gruppe von zwei oder mehr parallel zueinander ausgerichteten zweiten Steuerstangen (50) auf einer gemeinsamen Schwenkachse über eine in der Schwenkachse angeordnete ersten Achsstange (52) gelenkig verbunden sind, welche ihrerseits mit ihren anderen Enden an einer gegenüber dem Rollenträger (20) fixen horizontalen zweiten Achsstange (54) angelenkt sind, wobei insbesondere an der ersten Achsstange (52) Druckrollen (56) angeordnet sind, die von unten oder von oben auf ein mit den ringförmigen Bremsstrukturen (33) verbundenes Teil der Arretiervorrichtung (30) einwirken.

11. Mobiler Ständer (10) nach Anspruch 10, **dadurch gekennzeichnet, dass** bei Bewegung des Betätigungselements (42) die zweiten Steuerstangen (50) aus einer schrägen Position durch eine vertikale Position in eine entgegengesetzt schräge Position und umgekehrt bewegt werden.

12. Mobiler Ständer (10) nach einem der Ansprüche 1 bis 11, **dadurch gekennzeichnet, dass** der Rollenträger (20) Halterungen (16) für Gewichte (14) aufweist, in die insbesondere Gewichte (14) eingelegt sind.
